# EUROPEAN PATENT APPLICATION

(11) **EP 1 840 798 A1**
(43) Date of publication of application: **03.10.2007**
(21) Application number: 06006320.3
(22) Date of filing: 27.03.2006
(51) Int. Cl.: G06K 9/32

(54) **Method for classifying digital image data**

(71) Applicant: SONY DEUTSCHLAND GMBH, 10785 Berlin (DE)
(72) Inventor: Freiburg, Volker, Hedelfingerstrasse 61 70327 Stuttgart (DE); Erdler, Oliver, Hedelfingerstrasse 61 70327 Stuttgart (DE)
(74) Representative: Müller - Hoffmann & Partner

(57) **Abstract**

The present invention relates to a method for classifying digital image data (ID) which solves the problem that images (I) having image areas with artificial text overlay have to be detected and classified in video signals in a reliable manner. Therefore, a robust detection in the presence of additive noise is proposed which can be invariant with respect to interlaced or progressive modes of video sequences.

## Description

### Field of the Invention

The present invention relates to a method for classifying digital image data. More particular the present invention inter alia also relates to the noise robust detection of caption text overlays on non-uniform video scene background.

### Background of the Invention

When generating and/or displaying single images or sequences of images, for instance video scenes or the like for or on a display it is sometimes feasible to add and incorporate additional information in the form of texts into the displayed material. If such combined display material is received it is often important to maintain or to even improve the display quality of the added text information. Therefore, it is necessary to reliably detect areas within digital image data representing an image or a sequence thereof which refer to the text information in the display process.

### Summary of the Invention

It is an object of the present invention to provide a method for classifying digital image data which is capable of reliably indicating text elements in digital image data representing an image or a sequence of images.

The object underlying the present invention is achieved by a method for classifying digital image data according to the feature combination of independent claim 1. The object is further achieved by an apparatus, by a computer program product, as well as by a computer readable storage medium, according to independent claims 51, 52, and 53, respectively.

According to the present invention in its broadest sense a method for classifying digital image data is provided, wherein a post-processing is employed operating non-linearly and using artificial text overlay attribute constraints.

According to the present invention a method for classifying digital image data is provided, wherein a luminance component of the input image is processed by a filter bank with band-pass transfer characteristic that generates N separate filter responses, wherein each of said filter responses is binarized and post-processed non-linearly using typical attribute constraints of artificial text overlays, wherein said N post-processed filter results are recombined into a single binary image map, and wherein said single binary image map classifies each pixel of the original luminance image as being text or non-text.

According to the present invention a method for classifying digital image data is provided, comprising (a) a step of receiving (S1) digital image data or a part thereof as an input signal or as a part thereof, said digital image data or said part thereof being representative for an image or for a part or a sequence thereof, (b) a step of processing (S2) said digital image data in order to generate and provide image classification data, said image classification data at least one of indicating and describing at least one of the presence, the position and the further properties of text portions with respect to said image, said part of an image (I) or said sequence of images underlying said digital image data or a part thereof, and (c) a step of providing and/or applying (S3) said image classification data.

Said step (c) of processing (S2) said digital image data may comprise (c1) a sub-step of detecting and providing (S2-1) a luminance component of said digital image data, (c2) a sub-step of processing (S2-2) said luminance component by a filter bank operation, said filter bank operation having a band-pass transfer characteristic and said filter bank operation generating a plurality of N separate filter response signal components, N being an integer, (c3) a sub-step of binarizing (S2-3) said N filter response signal components, thereby generating respective binarized filter response signal components, (c4) a sub-step of applying (S2-4) to each of said binarized filter response signal components a respective post-processing operation, thereby generating respective binary band signals as post-processed binarized filter response signal components, said respective post-processing operation in each case operating non-linearly and said respective post-processing operation in each case using text overlay attribute constraints, and (c5) a sub-step of recombining (S2-5) said N post-processed binary filter response signal in order to form a single binary image map as a part or as a preform of said image classification data, said single binary image map classifying each pixel of said digital image data or of said luminance component thereof as being text or as being non-text.

### Brief description of the Drawings

The invention will now be explained based on preferred embodiments thereof and by taking reference to the accompanying and schematical figures.
- **Fig. 1**: is a schematical block diagram for elucidating a typical application of a text detector.
- **Fig. 2**: is a schematical block diagram for elucidating an alternative application of a text detector.
- **Fig. 3**: is a schematical block diagram for elucidating the structure of a text detector.
- **Fig. 4**: is a schematical block diagram for elucidating some internals of a band filter output post-processing operation according to an embodiment of the present invention.
- **Fig. 5**: demonstrates a possible definition of projection profiles according an embodiment of the present invention.
- **Fig. 6**: demonstrates a possible arrangement of vertical slices for an image data according to an embodiment of the present invention.
- **Fig. 7**: is a schematical block diagram for elucidating details of a line profile generation process according to an embodiment of the present invention.
- **Fig. 8**: is a schematical block diagram for elucidating details of a binary cleaning process according to an embodiment of the present invention.
- **Fig. 9**: is a flowchart for elucidating details of a so-called column profile generation operation according to an embodiment of the present invention.
- **Fig. 10**: is a flowchart for elucidating details of an output region operation according to an embodiment of the present invention.
- **Fig. 11**: is a schematical block diagram for elucidating a binary cleaning process for a combined signal according to an embodiment of the present invention.

- **Fig. 12**: is a schematical block diagram for elucidating the basic structure of the inventive method for classifying digital image data according to a preferred embodiment thereof.
- **Fig. 13**: is a flowchart for elucidating the basic structure of the inventive method for classifying digital image data according to a preferred embodiment thereof.

### Detailed description of the Invention

In the following functional and structural similar or equivalent element structures will be denoted with the same reference symbols. Not in each case of their occurrence a detailed description will be repeated.

According to the present invention a method for classifying digital image data is provided, wherein a post-processing is employed operating non-linearly and using artificial text overlay attribute constraints.

According to the present invention a method for classifying digital image data is provided, wherein a luminance component of the input image is processed by a filter bank with band-pass transfer characteristic that generates N separate filter responses, wherein each of said filter responses is binarized and post-processed non-linearly using typical attribute constraints of artificial text overlays, wherein said N post-processed filter results are recombined into a single binary image map, and wherein said single binary image map classifies each pixel of the original luminance image as being text or non-text.

According to the present invention a method for classifying digital image data is provided, comprising (a) a step of receiving (S1) digital image data ID or a part thereof as an input signal IS or as a part thereof, said digital image data ID or said part thereof being representative for an image I or for a part or a sequence thereof, (b) a step of processing (S2) said digital image data ID in order to generate and provide image classification data ICD, said image classification data ICD at least one of indicating and describing at least one of the presence, the position and the further properties of text portions with respect to said image I, said part of an image I or said sequence of images I underlying said digital image data ID or a part thereof, and (c) a step of providing and/or applying (S3) said image classification data ICD.

Said step (c) of processing (S2) said digital image data ID may comprise (c1) a sub-step of detecting and providing (S2-1) a luminance component SI of said digital image data ID, (c2) a sub-step of processing (S2-2) said luminance component SI by a filter bank operation FB, said filter bank operation FB having a band-pass transfer characteristic and said filter bank operation FB generating a plurality of N separate filter response signal components FRSj; j = 1, *...,* N), N being an integer, (c3) a sub-step of binarizing (S2-3) said N filter response signal components FRSj; j = 1, ..., N, thereby generating respective binarized filter response signal components SFj, j = 1, ..., N, (c4) a sub-step of applying (S2-4) to each of said binarized filter response signal components SFj; j = 1, ..., N a respective post-processing operation PPj; j = 1, ..., N, thereby generating respective binary band signals as post-processed binarized filter response signal components SPj; j = 1, ..., N, said respective post-processing operation PPj; j = 1, ..., N in each case operating non-linearly and said respective post-processing operation PPj; j = 1, ..., N in each case using text overlay attribute constraints TOAC, and (c5) a sub-step of recombining (S2-5) said N post-processed binary filter response signal components SPj; j = 1, ..., N in order to form a single binary image map SC as a part or as a preform of said image classification data ICD, said single binary image map SC classifying each pixel of said digital image data ID or of said luminance component SI thereof as being text or as being non-text.

The inventive method my be is adapted and designed in order to reliably detect pixels and/or areas of said image (I) or a part thereof underlying said digital image data (ID) or a part thereof.

Said text overlay attribute constraints TOAC may be representative for one or an arbitrary combination of attributes of the group consisting of
- medium to high contrast,
- groups of characters/words with the same font, colour, and/or alignment,
- a principle direction being strict or approximately horizontally,
- non-occlusion by other in-scene objects,
- steady or moving uniformly in straight direction, for instance in form of a news ticker or movie credits,
- minimum size,
- maximum size, and
- minimum appearance time.

Said filter bank FB may be adapted in order to operate in 1-D dimensional horizontal spatial direction.

Said filter bank operation FB may comprise one or a plurality of processes of the group consisting of short window discrete Fourier transform operations, short window discrete cosine transform operations, Goertzel algorithm based operations, FIR operations and IIR operations, in particular in order to obtain a band-limited, horizontally directed and/or multi-band representation of the luminance signal component SI.

Said post-processing operations PPj; j = 1, ..., N may be adapted in order to determine a short window signal energy, in particular in a small horizontal window first, and then in particular to binarize the respective signals using a band-specific threshold.

Said single binary image map SC as said part or preform of said image classification data ICD may be obtained in said sub-step c5 of recombining S2-5.

Said N post-processed binary filter response signals SPj; j = 1, ..., N may be subjected to a combined binary cleaning operation BCL_{c} in order to generate a final binary map ST or a final binary map signal ST as a control signal.

For each of said post-processing operations PPj; j = 1, ..., N in a first step a respective signal energy or energy value may be determined, in particular for a respective short window of a respective horizontal length Sw, in particular by a EC operation, thereby generating respective signal energy values SEj; j = 1, ..., N.

For each of said post-processing operations PPj; j = 1, ..., N a respective resulting energy signal SEj; j = 1, ..., N may be formed with a resolution which is reduced horizontally by a factor which is given by the horizontal length Sw of the respective short window.

For each of said post-processing operations PPj; j =1,..., N in a following step a respective signal energy value or level SEj; j = 1, ..., N may be compared to a respective threshold value TCj; j = 1, ..., N, in particular by a respective binarization operation BIN in particular in order to derive a respective binary map signal SBj; j = 1, *...,* N.

For each of said post-processing operations PPj; j = 1, ..., N the respective threshold values TCj; j = 1, ..., N may be adaptively changed to or with respect to a measured noise level NL, in particular in order to mitigate effects of additive noise which in particular might be contained in the input signal IS, SI.

The adaptive change of the respective threshold values TCj; j = 1, ..., N may be achieved by a respective threshold adaptation operation TA, which in particular combines respective fixed but band specific threshold levels THj; j = 1, ..., N, in particular with a respective variable offset, which is in particular controlled by the measured noise level NL.

For each of said post-processing operations PPj; j = 1, *...,* N the respective variable offset may be determined depending on the respective type of the used filter bank or filter bank operation FB and/or on the statistics of the expected noise signal.

The respective filter bank and the respective filter bank operations FB may be implemented by linear and time-invariant FIR filters.

The respective noise is modelled may be an additive white Gaussian noise.

For each of said post-processing operations PPj; j = 1, ..., N after the respective binarization process a respective initialized profile may be generated as a respective horizontal projection from the respective binary band map signal SBj; j = 1, ..., N, in particular by a respective line profile generation operation LPG.

For each of said post-processing operations PPj; j = 1, ..., N the respective line profile may be defined as a respective binary vector with H elements for a picture height of H scan lines, in particular realizing 1 bit per scan line, H being an integer.

For each of said post-processing operations PPj; j = 1, ..., N the respective line profile element is set to a value of "1", if there may be a substantial indication for a text area from the respective binary map SBj; j = 1, ..., N.

For each of said post-processing operations PPj; j = 1, ..., N a respective line profile element may be set to a value of "0", if there is no substantial indication for a text area from the respective binary map SBj; j = 1, ..., N.

For said line profile generation operation LPG in a first step an image area may be partitioned into M slices, in particular by a respective partitioning operation VSPk; k = 1, ..., M, M being an integer.

For each of said line profile generation processes LPG in a following step a respective slice profile may be generated in particular by summing up all of the plurality of Hw horizontal bits in a respective slice of a respective binary map, in particular by the respective binarization operation VSBk; k = 1, ..., M.

For each of said line profile generation operations LPG a respective sum may be compared against a fixed threshold value VTH and

A binary output value may be generated with having a value of "1", if the respective sum is larger than or equal to the respective threshold value VTH.

For each of said line profile generation operations LPG the respective output bit may be generated with having a value of "0", if the respective sum is not greater than or equal to respective threshold value VTH.

A respective overall line profile SPLj; j = 1, ..., N may be created by a respective profile combination operation PC, in particular from all slice profiles.

The respective slice profiles may be combined by means of a bit-wise OR operation.

The respective initial line profile SPLj; j = 1, ..., N may be used as an auxiliary input value for a respective binary cleaning operation BCLj; j = 1, ..., N.

The respective initial binary line profile SPLj; j = 1, ..., N may be processed by a respective line run length cleaning operation RLC, in particular in order to produce a respective cleaned profile SPCj; j = 1, ..., N.

For each of said binary cleaning operation BCLj; j = 1, ..., N first of all sequences of a plurality of up to NVC,N elements having the value "0" which may be enclosed by elements having the value "1" are replaced by or with the value "1".

For each of said binary cleaning operations BCLj; j = 1, ..., N in a further step all sequences of pluralities of up to NVC,N elements having the value "1" which are enclosed by elements having the value "0" may be replaced by the value "0".

Each of said binary band map signals SBj; j = 1, ..., N may be processed by a respective column profile generation operation CPG, in particular in order to produce a respective binary band map SBMj; j = 1, ..., N.

A respective cleaned profile SPCj; j = 1, ..., N may be adapted to control which lines in the respective binary map SBj; j = 1, ..., N are used for processing.

All elements of a corresponding scan line in a respective binary band map signal SBMj; j = 1, *...,* N may be set to be zero, if a profile element has the value "0".

A corresponding element in a respective output line profile SPPj; j = 1, ..., N may be set to have a value of "0", in particular via the respective profile update signal SPUj; j = 1, ..., N and a respective profile update operation PU, if a processing of remaining lines of a respective binary map SBj; j = 1, ..., N results in a line having elements with values which are all set to "0" in the respective binary band map SBMj; j = 1, ..., N.

The processing may be designed in order to have the respective binary map and the line profile always in synchronicity.

The respective column profile generation operation CPG may be adapted in order to loop over all sections marked in the respective binary map and the line profile SPCj; j = 1, ..., N as potential text blocks to be evaluated.

For each "0" to "1" transition in the respective line profile SPCj; j = 1, ..., N an iteration may be started and a respective column profile is initialized with the respective contents of the corresponding line in the binary map, wherein in particular the respective scan line number is recorded as a value n1.

All following scan lines of the respective binary map may be added to the respective column profile, in particular up to and including a last line before a respective "1" to "0" transition in the line profile, wherein the respective line number is recorded as a value n2.

The respective elements of a respective column profile may be compared against a threshold value HTH in order to obtain the binary column profile.

The column profile may be cleaned up by replacing sequences of pluralities of up to NHC,N elements having a value "0" which are enclosed by elements having a value "1" with a value "1", in particular in a similar manner as with respect to the RLC operation for the line profile.

In a following step all sequences of pluralities of up to NHC,N elements having a value of "1" which are enclosed by elements having a value of "0" may be replaced by values of "0".

All lines in a range of n1 to n2 within the respective binary output map SBMj; j = 1, ..., N may be replaced by a cleaned binary column profile.

A respective line profile SPPj; j = 1, ..., N may be updated and set to a value "0" for all elements from n1 to n2, if the respective column profile contains only values of "0" after the respective binarization step has been performed.

The respective column profile generation operation CPG may be repeated iteratively with a next iteration step until an end of the respective image at a respective scan line H.

Respective resulting binary band maps SBMj; j = 1, ..., N may be combined by a respective band combination operation BBC, in particular in order to produce a single binary map SCM.

Said binary line profiles SPPj; j = 1, ..., N may be combined, in particular in order to produce a single binary line profile SCP.

The respective single binary map SCM and the respective single binary line profile SCP may be used together as said single binary map SC.

The respective combination operation may be realized via a look-up table, which in particular performs a mapping from a N bit value to a binary value, further in particular by combining and using the binary values of band maps or line profiles from a same spatial position or image coordinate as a table index, in particular in order to find the respective binary replacement values.

The final cleaning operation BCL_{C} of the combined signal SC as a combination of SCM and of SCP may be performed, which is in particular structurally identical to the cleaning operation BCLj; j = 1, ..., N for the respective band signals, in particular except for the output or the cleaned line profile.

According to a further aspect of the present invention a system and/or an apparatus for classifying digital image data are provided, which are adapted and comprise means for realizing a method for classifying digital image data according to the present invention.

According to a further aspect of the present invention a computer program product is provided, comprising computer program means which is adapted in order to perform a method for classifying digital image data according to the present invention and the steps thereof when it is executed on a computer or a digital signal processing means.

According to a further aspect of the present invention a computer readable storage medium is provided, comprising a computer program product according to the present invention.

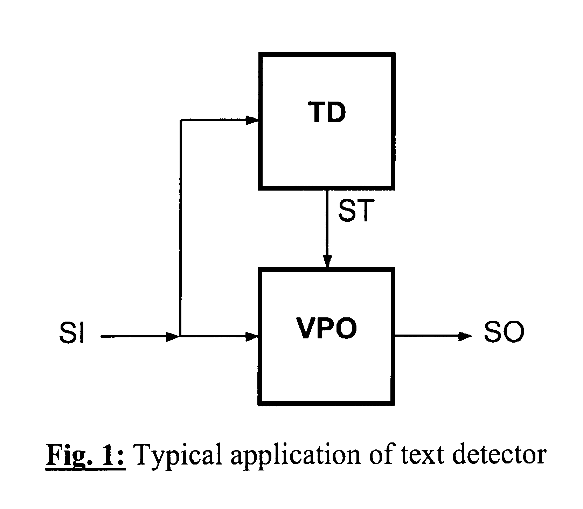

These and further aspects of the present invention will be further discussed in the following:
The present invention inter alia also relates to the noise robust detection of caption text overlays in or on non-uniform video scene background.
Problems arise in the field of the detection of image areas with artificial text overlay in video sequences. The detection should be robust in the presence of additive noise. The detection should be invariant to interlaced or progressive mode of the video sequence.
The present invention inter alia presents a solution for such problems. The luminance component of the input image is processed by a filter bank with band-pass transfer characteristic that generates N separate filter responses. Each of these filter responses is binarized and post-processed non-linearly using typical attribute constraints of artificial text overlays. The N post-processed filter results are then recombined into a single binary image map that classifies each pixel of the original luminance image as being text or non-text.
In [1], a method for extraction and recognition of video captions in television news broadcast is described. The overall system identifies text regions in groups of subsequent luminance video frames, segments individual characters in these text regions, and uses a conventional pattern matching technique to recognize the characters. The text region detection part uses a 3×3 horizontal differential filter to generate vertical edge features, followed by a smoothing and spatial clustering technique to identify the bounding region of text candidates. The candidate regions are interpolated to sub-pixel resolution and integrated over multiple frames to help improving the separation of non-moving text from moving scene background.
The method described in [2] first segments a luminance image into nonoverlapping homogeneous regions using a technique called generalized region labelling (GRL), which is based on contour tracking with chain codes. The homogeneous regions are then filtered initially by spatial size properties to remove non-text regions. The regions are then refined and binarized using a local threshold operation. The refinement is followed by another verification step that removes regions of small size or with low contrast to their bounding background. The remaining individual character regions are then tested for consistency, i.e. alignment along a straight line, inter-character spacing, etc.. In a final step, text regions are verified by analysis over five consecutive frames in the video sequence.
The text extraction described in [3] first computes a 2-D colour intensity gradient image from RGB colour frames at multiple scales. Fixed rectangular regions of 20x 10 pixels in all scales of the gradient images are used as input features into an artificial neural network for classification into text regions and non-text background regions. The network responses from different scales are integrated into a single saliency map from which initial text region boxes are extracted using a shape-restricted region growing method. The initial text region boxes are then refined by evaluation of local horizontal and vertical projection profiles. The text region boxes are then tracked over multiple frames to reduce the detection of false positives.
In [4], a method for detection of still and moving text in video sequences is presented. The detector is intended for identification of text, which is sensitive for video processing. The primary features are luminance edges (i.e. derivatives) in horizontal direction, which are correlated over three adjacent scan lines in an interlaced video frame. The density of edges per line is then used to decide during post processing whether a line contains text or not.
In [5], a method for text extraction from video sequences for a video retrieval system is described. The detection part uses a spatial, local accumulation of horizontal gradients derived by the Sobel operator on the luminance component as basic text feature. The accumulated gradient image is binarized using a modification of Otsu's method to determine an optimal threshold from the grey value histogram of the input image. The binary image is then processed by a number of morphological operations, and the resulting text candidate regions are selected by geometrical constraints of typical horizontal text properties. The quality of localized text region is finally improved by multi frame integration.
The method described in [6] uses the coefficients of DCT compressed video sequences for detection of image areas containing text. Specifically, the coefficients representing horizontal high frequency luminance variation are utilized to initially classify each 8x8 pixel image block of a MPEG stream into text or non-text area. The 8x8 pixel block units are morphologically processed and spatially clustered by a connected component analysis to form the text region candidates. In a refinement step, only candidate regions are retained, which enclose at least one row of DCT coefficients representing vertical high luminance variation.
This report addresses the problem of detecting image areas with artificial text overlay in video sequences. The objective of such a detector is to segment the image into regions that have been superimposed with a video character generator and the residual part of the image that contains the main scene content without text. The intended target application of the text detector is a picture improvement system that applies different types of processing operations to the text and the non-text regions to achieve an overall enhanced portrayal of both text and non-text image areas.
Text overlays can origin from several steps in the production and transport chain. Specifically, open captions can be inserted during movie or video post-postproduction, by the broadcaster, by transformation or transcoding during video transport, or by a multimedia playback device such as a DVD-player. The insertions point in the end-to-end chain between production and display influences the amount of quality impairment of the text representation. Obviously, there is no impairment to be expected if the display device superimposes the text at the end of the chain without further processing, like with traditional closed caption or OSD. However, the earlier in the transport chain text is superimposed onto the video scene, the more vulnerable it is for image quality degradation, esp. if transport includes a lossy compression scheme like e.g. MPEG. In general, the degradation of the text area will be more apparent to the viewer since usual codec and/or other video processing during transport, as well as potential picture improvement processing at the display end, is designed with a focus on best representation of natural scene content rather than artificial signals like text. A text region detector would therefore be helpful in order to switch to a different type of processing for text than for non-text areas. The other way around, it is also beneficial for the processing of the natural scene if the text area is properly excluded. This affects especially operations that select their parameters from global image statistics, like e.g. a colour or luminance histogram based transformation.

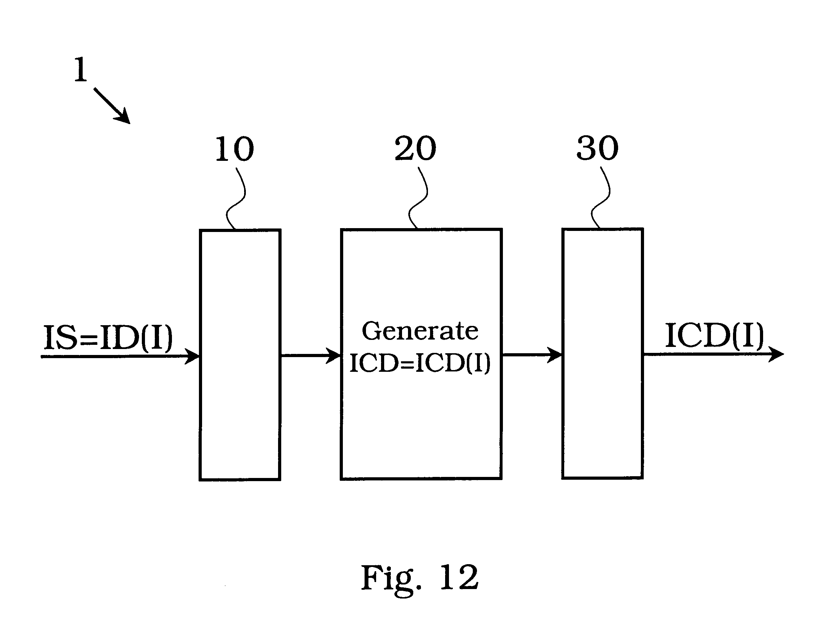

Fig. 12 is a schematical block diagram for elucidating the basic structure of the inventive method for classifying digital image data according to a preferred embodiment thereof.
First of all digital image data ID which are representative for and therefore a function of an image I are provided as an input signal IS. This is realized in the embodiment shown in Fig. 12 by the action of a first or receiving section 10 which realizes the respective process of receiving S1. The received input signal IS is then forwarded to a second or processing section 20 in order to realize a processing S2 of said digital image data ID to thereby generate respective image classification data ICD which are then also a function of the image I underlying the input signal IS.
Said image classification data ICD are then forwarded to a third or application section 30 where the respective image classification data ICD are in some sense further processed for instance applied to other processes or provided as output data.

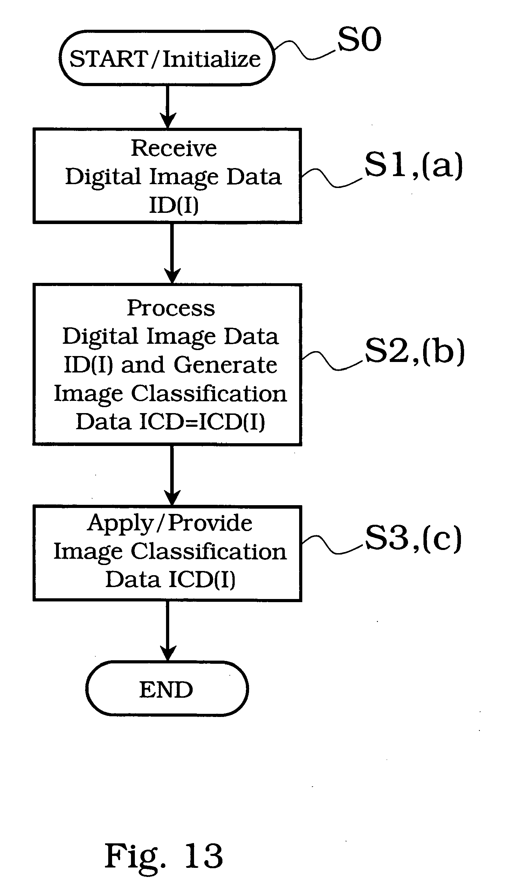

Fig. 13 is a flowchart for elucidating the procedural structure of an embodiment of the inventive method for classifying digital image data. After a start or initializing step S0 in a first step S1 digital image data ID are received. In the sense of the present invention the process of receiving S1 said digital image data ID may also be referred to as a process of providing and/or of generating said digital image data ID.
In a following second step S2 said digital image data ID are processed to thereby generate image classification data ICD.
In a following third step S3 said image classification data ICD are provided and/or applied in some sense.
In each case said image classification data are generated so as to indicate and/or describe the presence and/or further properties of text portions and of text contained in the underlying image I or in a sequence of images I.
In the following details of the distinct processing steps are explained in more extent by means of Figs. 1 to 11.
Fig. 1 depicts a typical embodiment for the application of the text region detector in a picture improvement system, which receives input video signal SI and generates output video signal SO. The video processing operation VPO is controlled directly by the text detector TD to switch between a parameter set for text area and a parameter set for non-text area by means of control signal ST.

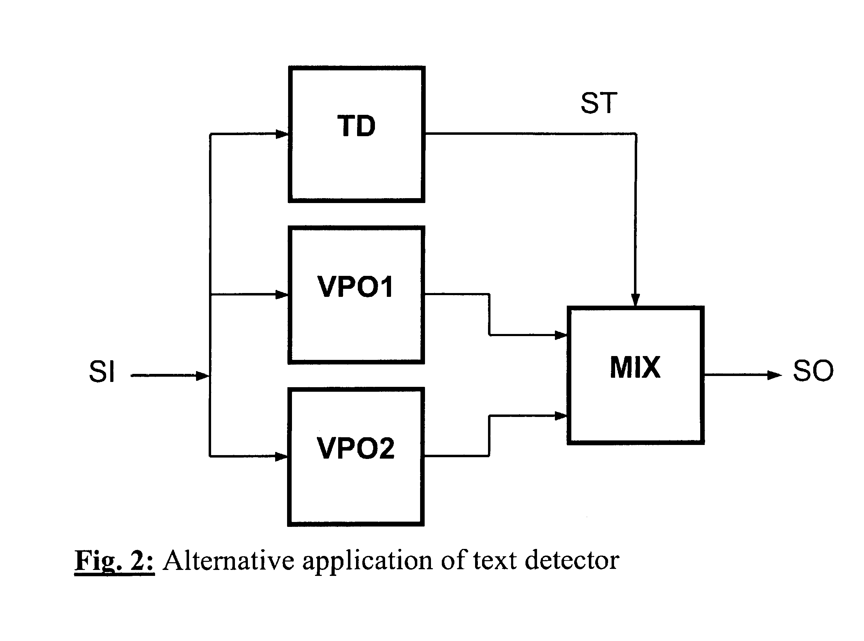

Fig. 2 depicts an alternative embodiment for the application of the text region detector in a picture improvement system, where the same effect is achieved by application of video processing operationVPO1 for text area processing and video processing operation VPO2 for non-text processing. The resulting images from VPO1 and VPO2 are then combined by a blending operation MIX controlled by the signal ST of the text detector TD.
The list of representative video processing operations includes artefact reduction in general, analogue noise reduction, digital noise reduction (block noise, mosquito noise), sharpness enhancement, colour transformation, histogram transformation, interlaced to progressive conversion, frame rate conversion, preprocessing before compression, post-processing after decompression, but is not limited to.
For the application scenario outlined above, it is important that the text detection performance is independent from progressive or interlaced video mode, esp. if the video processing operation VPO itself includes an interlaced to progressive conversion step.
In case of reception from analogue broadcast or playback from an analogue VCR device, the input signal SI is susceptible for noise. It is therefore desirable that the text detector is robust against additive noise, esp. if the video processing operation VPO includes a noise reduction step.
In a slightly different application scenario, the text detection result ST does not control directly the video processing but rather supports other video analysis modules, like e.g. realizing a ticker detection for motion estimation.
Most of the existing literature on methods for text detection is focussed on the application for video summarization and meta content extraction for digital video libraries [1-3, 5, 6]. These methods assume noise-free, progressive video and thus require additional noise reduction and/or interlaced to progressive conversion beforehand for such video material. Furthermore, these methods exploit the property of steady captions to appear in a number of consecutive frames for temporal sub-sampling and/or multi-frame integration. As a consequence, the regions detected by these methods expose a temporal inaccuracy, which makes them disadvantageous for the purpose of picture improvement. There is only few prior art [4], that addresses text detection for the application of video enhancement.

### Aspects of the invention:

The appearance of text in video can be categorized by two distinct origins. The first origin is in-scene text, which is usually found on in-scene objects. This kind of text has an unlimited variety of appearance and is usually not prepared for good video reproduction. However, a special treatment of this type of text for video enhancement is less compelling. In contrast, the second origin is artificial text, which is characterized by being intentionally superimposed onto the video background to carry additional information complementing the visual information. For such text, a couple of attributes can be postulated, which can then be exploited for detection. Since the artificial text appears intentionally, it is designed for good readability for the viewer. Good readability is achieved by constraints like:
- Medium to high contrast
- Groups of characters (words) with same font, colour, and alignment
- Principal direction is horizontal
- Not occluded by other in-scene objects
- Steady or moving uniformly in straight direction (news ticker or movie credits)
- Minimum size
- Maximum size
- Minimum appearance time

The method presented here is designed to reliably detect artificially superimposed text, which is aligned in horizontal direction. The initial feature that allows a separation of text from background is derived from the observation, that image areas with a high contrast text overlay expose a higher luminance gradient density compared to the surrounding non-overlay background. For most language fonts, the gradient density feature in horizontal direction is more prominent than in the vertical direction, because the text characters are dominantly composed of vertical strokes. A properly designed horizontal band-pass filter arrangement, which will result in an initial map of text candidate areas, can exploit this feature. These candidate areas are then further filtered non-linearly using some of the attribute constraints for artificial text listed above.

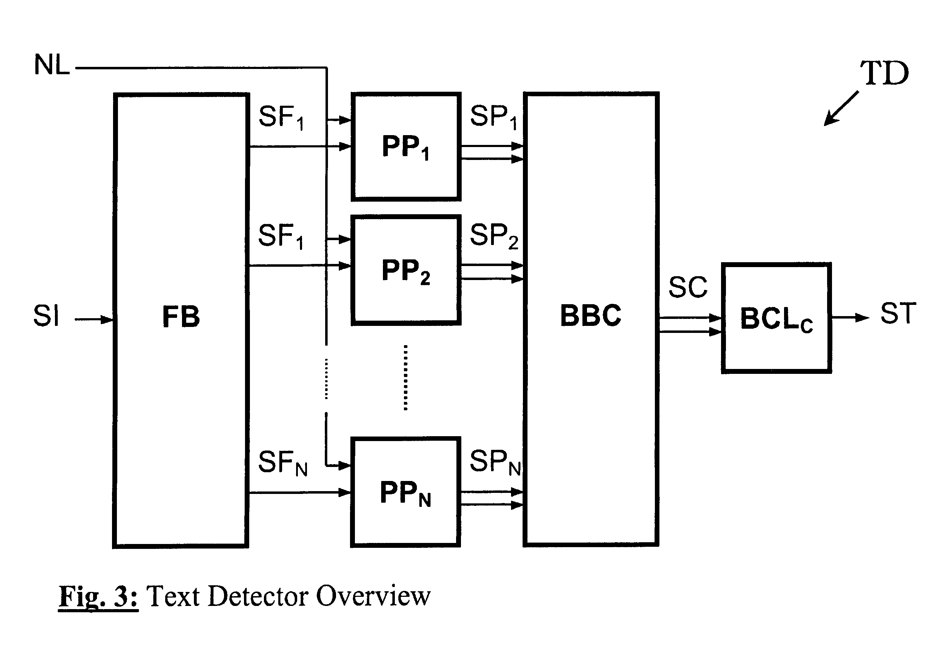

Fig. 3 depicts the overall block diagram of the proposed method. The input luminance image SI is processed by the filter bank FB that generates N separate filter responses SF1 to SFN. The filter bank operates in 1-D horizontal spatial direction only. The filter bank FB can be implemented in a variety of embodiments. For a low number of band channels, it is most efficient to have a direct implementation of a FIR or IIR filter. Alternative implementations can be based on the Goertzel algorithm or any other efficient partial computation of a short window discrete Fourier transform or discrete cosine transform in order to obtain a band-limited, horizontally directed multi-band representation of the input signal SI.

Each of the band filter output signals SF1 to SFN are then individually processed by the post-processing operations PP1 to PPN. The post-processing first determines the short window signal energy in a small horizontal window and then binarizes the signal using a band specific threshold. The resulting binary band maps are then combined by the band combination operation BBC to produce a single binary map SC. As a last processing step, the combined binary cleaning operation BCLC generates the final binary map signal ST.

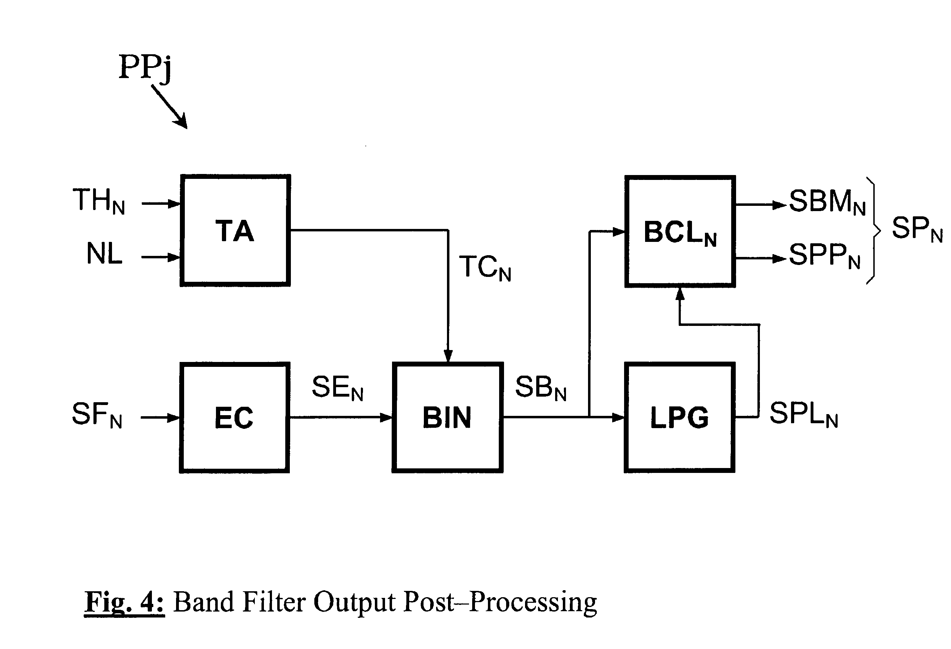

Fig. 4 depicts the band signal post-processing operation PP1 to PPN for each band signal SF1 to SFN. Each post-processing operation has the same structure but is differently parameterised. In a first step, the signal energy is determined for a short window of horizontal length SW by the EC operation. The resulting signal SEN has therefore a resolution, which is reduced horizontally by factor SW. In a second step, the signal energy level of SEN is compared to a threshold value TCN by the binarization operation BIN to derive a binary map signal SBN.

In order to mitigate the effects of additive noise in the input signal, the threshold value TCN is changed adaptively to the measured noise level NL. This is achieved by the threshold adaptation operation TA, which combines the fixed but band-specific threshold level THN with a variable offset controlled by the noise level NL. The variable offset has to be determined depending on the type of filter bank and the statistics of the expected noise signal. In a particular embodiment, the filter bank is implemented by linear time-invariant FIR filters, and the noise is modelled as additive white Gaussian noise. In this case, for a known (measured) noise level of variance σ2, the required threshold offset is proportional to σ.

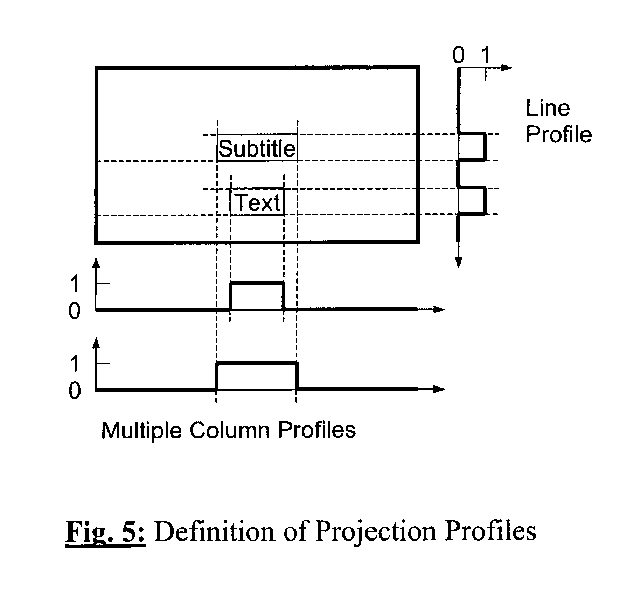

After binarization, an initial line profile is generated as a horizontal projection from the binary band map signal SBN by the line profile generation operation LPG. The line profile is defined as a binary vector with H elements for a picture height of H scan lines, i.e. there is 1 bit per scan line. A line profile element is set to value "1", if there is substantial indication of text area from the binary map SBN. Otherwise, the line profile element is set to "0". Fig. 5 depicts the geometrical definition of the projection profiles.

Usually, subtitle text is not covering the whole image area horizontally. Instead it is restricted to a shorter text string that covers only a fraction of the horizontally available space. Furthermore, the position of the text is not known. The text can appear left or right adjusted, or at any position in-between. In order to improve the robustness of the line profile generation, the input image is partitioned horizontally into M vertical slices. For each slice, an individual line profile is generated.
The vertical slices are spatially arranged with maximum horizontal overlap. The horizontal window size of a vertical slice depends on the aspect ratio of the luminance image and the expected minimal horizontal length of text lines.

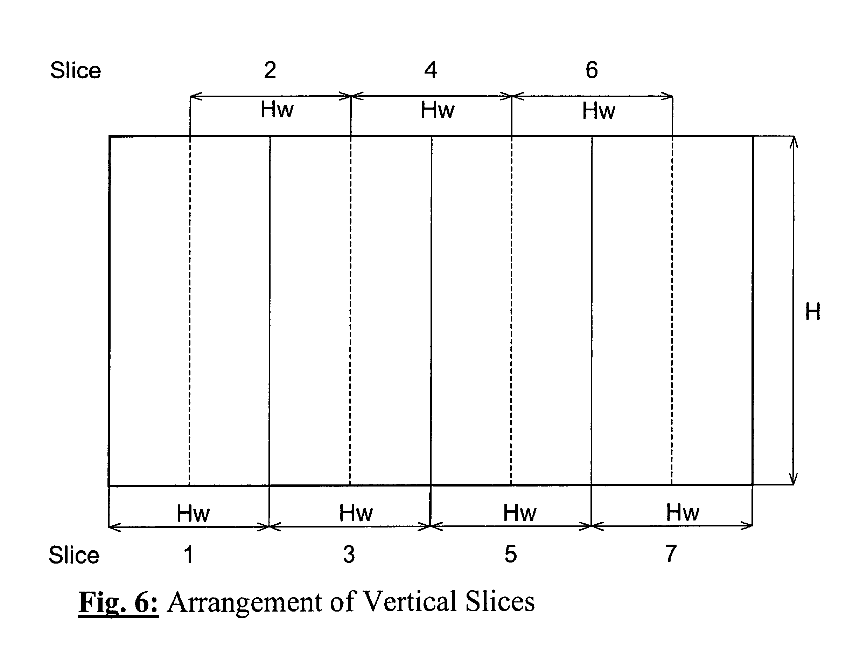

In Fig. 6, the overlap arrangement is depicted for the particular embodiment of a partitioning with M=7 slices for a 16:9 picture aspect ratio.

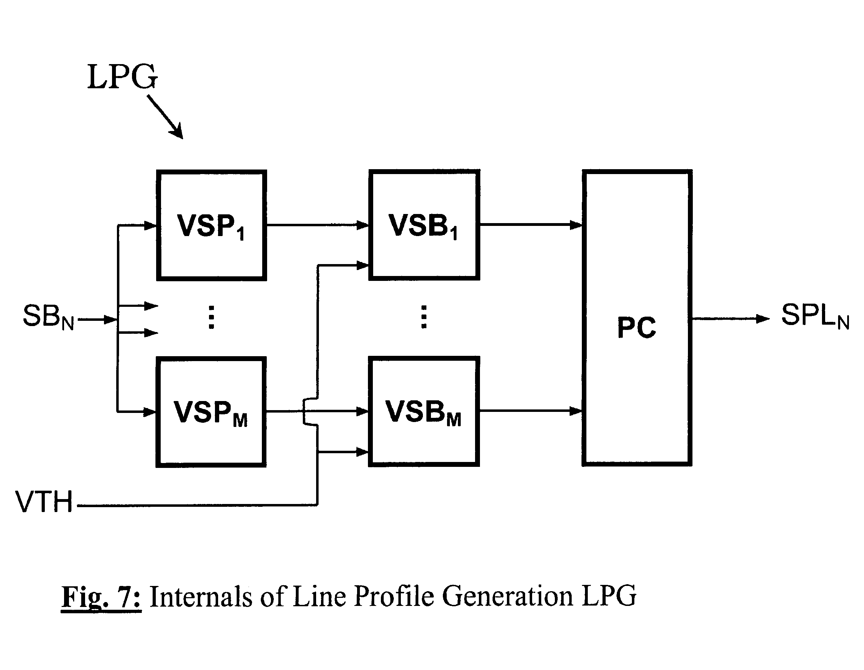

Fig. 7 depicts the block structure of the line profile generation. In a first step, the image area is partitioned into the slices by the partitioning operation VSPM. In a second step, summing up all horizontal HW bits in a slice of the binary map by the binarization operation VSBM generates each slice profile. Then, by comparing the sum against a fixed threshold value VTH, a binary output value is generated with value "1" if the sum is greater or equal to the threshold value. Otherwise, the output bit is generated with value "0". The overall line profile SPLN is created by the profile combination operation PC from all slice profiles. In a particular embodiment, the slice profiles are combined by means of a bit-wise "OR" operation.

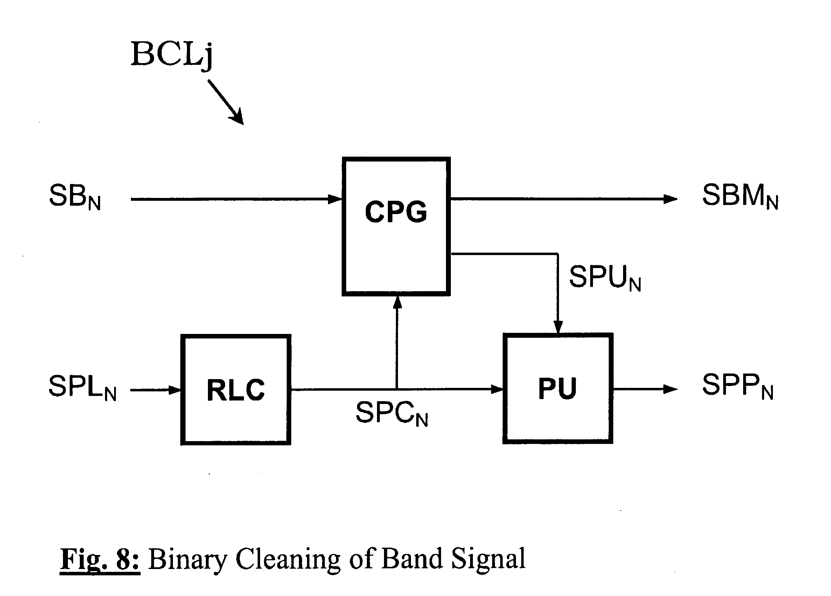

The initial line profile SPLN is an auxiliary input to the binary cleaning operation BCLN. The internals of the cleaning operation BCLN are depicted in Figure 8. The initial binary line profile SPLN is processed by the run length cleaning operation RLC to produce the cleaned profile SPCN. The cleaning operation first replaces sequences of up to NVC,N "0" elements enclosed by "1" elements with the value "1". In the second step of the cleaning operation, all sequences of up to NVO,N "1" elements enclosed by "0" elements are replaced with the value "0".

The binary band map signal SBN is processed by the column profile generation operation CPG to produce the binary band map SBMN. The cleaned profile SPCN controls, which lines in the binary map SBN are used for processing. If a profile element has the value "0", then all elements of the corresponding scan line in the signal SBMN will also be set to zero. If the processing of the remaining lines of SBN results in a line with all elements set to value "0" in signal SBMN, then the corresponding element in the output line profile SPPN will also be set to the value "0" via the profile update signal SPUN and the profile update operation PU. This procedure ensures that the binary map and the line profile are always in sync.

The CPG operation now loops over all potential text blocks marked in the binary map and the line profile. With each "0" to "1" transition in the line profile SPCN, one iteration begins and a column profile is initialised with the contents of the corresponding line in the binary map and the scan-line number is recorded as n1. All following scan-lines of the binary map are added to the column profile up to and including the last line before a "1" to "0" transition in the line profile, whose scan-line number is recorded as n2. The elements of the column profile of this region are then compared against a threshold value HTH to obtain a binary column profile. Similar to the RLC operation for the line profile, the column profile is cleaned up by replacing sequences of up to NHC,N "0" elements enclosed by "1" elements with the value "1". In a second step, all sequences of up to NHO,N "1" elements enclosed by "0" elements are replaced by "0" values.

Then, all lines in the range from n1 to n2 in the binary output map SBMN are replaced by the cleaned binary column profile. If the column profile contains only zeros after the binarization step, the line profile SPPN has to be updated and set to value "0" for all elements from n1 to n2, as indicated above.

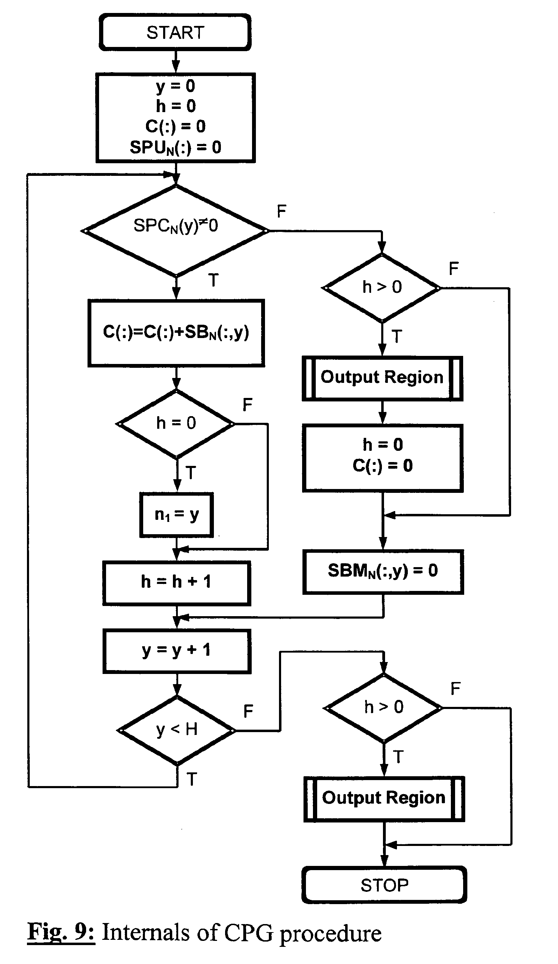

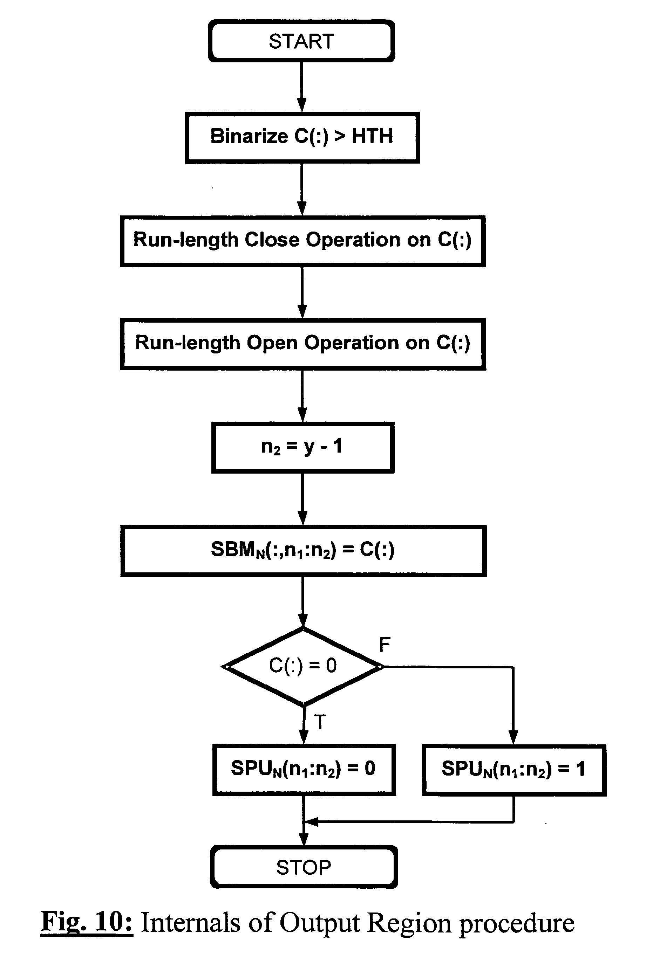

This column profiling is repeated with the next iteration until the end of the image at scan line H is reached. Figure 9 depicts a flow diagram of the CPG operation, where the vector C holds the column profile accumulator, and the colon notation (:) indicates a line vector operation. Figure 10 depict the subroutine named Output Region, which is referenced twice by the CPG operation.

The resulting binary band maps SBM to SBMN are then combined by the band combination operation BBC to produce a single binary map SCM. Similarly, the binary line profiles SPP1 to SPPN are combined to produce a single binary line profile SCP. Both signals SCM and SCP together are denoted as SC in Figure 3. In a particular embodiment, the combination operation is implemented as a per value look-up table that performs a mapping from an N bit value to a binary value, i.e. the binary values of band maps or line profiles from the same spatial positions (image coordinate) are combined and used as table index to find the binary replacement value.

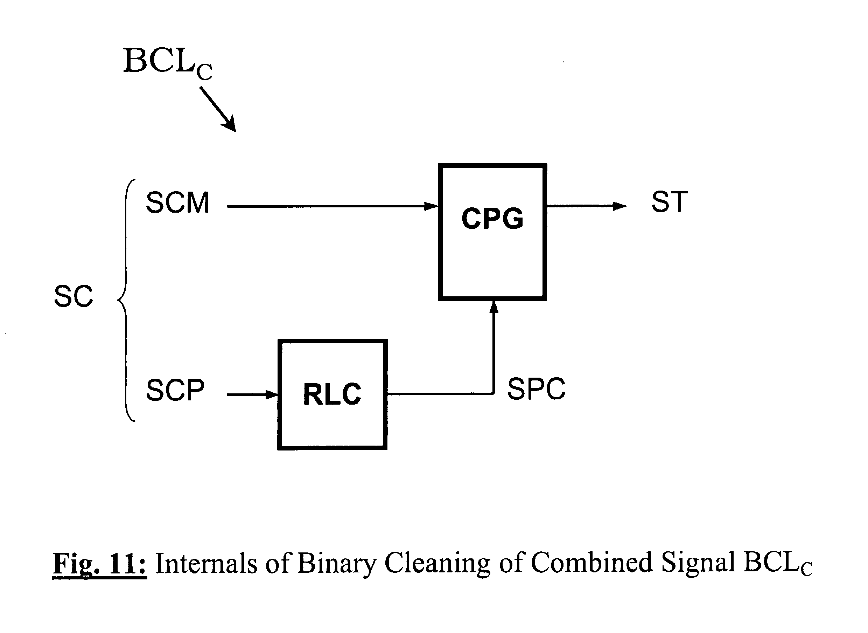

The final cleaning operation BCLC of the combined signal in Fig. 3 is structurally identical to the cleaning operation BCLN for a band signal in Fig. 4, except for the output of the cleaned line profile being omitted. Fig. 11 depicts the internals of the BCLC operation that produces the final binary text area map.

### Cited References

- **[1]**: T. Sato, T. Kanade, E.K. Hughes, M.A. Smith, S. Satoh, Video OCR: Indexing Digital News Libraries by Recognition of Superimposed Captions, ACM Multimedia Systems Special Issue on Video Libraries, 7(5), pp. 385-395, 1999.
- **[2]**: J.-C. Shim, C. Dorai, and R. Bolle, Automatic text extraction from video for content-based annotation and retrieval, Proc. Int. Conf. on Pattern Recognition, vol. 1, pp. 618-620, Brisbane, Australia, Aug. 1998.
- **[3]**: R. Lienhart, A. Wernicke, Localizing and Segmenting Text in Images and Video, IEEE Transactions on Circuits and Systems for Video Technology, Vol. 12, No.4, pp. 256 -268, April 2002.
- **[4]**: Nicolas et al., Text Detection, US Patent No. 6,842,537 B2, Jan. 11, 2005.
- **[5]**: C. Wolf et al., Method for Detecting Text Zones in a Video Image, Int. Patent Application No. WO 02/095662, Nov. 28, 2002.
- **[6]**: Y. Zhong, H. Zhang, and A.K. Jain, Automatic Caption Localization in Compressed Video, IEEE Trans. on Pattern Analysis and Machine Intelligence, Vol. 22, No. 4, pp. 385-392, April 2000.

### List of Reference Symbols, Abbreviations and Identifiers

- **BBC**: Binary band signal combination operation
- **BCL_{C}**: Binary combined map cleaning operation
- **BCL_{N}**: Binary band map cleaning operation
- **BIN**: Binarization operation
- **C**: Column profile accumulation vector
- **CPG**: Column profile generation
- **EC**: Short window energy computation operation
- **FB**: Filter bank operation, filter bank
- **FRS,FRSj**: Filter bank output signal (non-binarized), filter response signal (non-binarized)
- **H**: Height of picture, i.e. number of scan-lines
- **HTH**: Binarization threshold parameter for column profile generation
- **Hw**: Horizontal width of vertical slices in the line profile generation
- **IS**: Input signal
- **LPG**: Line profile generation
- **M**: Number of vertical slices in the line profile generation
- **MIX**: Signal mixing operation
- **N_{HC,N}**: Horizontal closing operation sequence length parameter
- **N_{HO,N}**: Horizontal opening operation sequence length parameter
- **NL**: Noise variance level
- **N_{VC,N}**: Vertical closing operation sequence length parameter
- **N_{VO,N}**: Vertical opening operation sequence length parameter
- **PC**: Profile combination operation
- **PP_{N}**: Band filter post-processing operation
- **PU**: Profile update operation
- **RLC**: Run-length cleaning operation
- **SBM_{N}**: Binary band map signal
- **SB_{N}**: Binary band map signal
- **SC**: Combined binary signal
- **SCM**: Combined binary map signal
- **SCP**: Combined binary line profile signal
- **SE_{N}**: Short window accumulated signal energy
- **SF_{N}**: Filter bank output signal (binarized), filter response signal (binarized)
- **SI**: Input luminance signal
- **SO**: Output luminance signal
- **SPC**: Cleaned combined binary line profile signal
- **SPC_{N}**: Binary band cleaned line profile signal
- **SPL_{N}**: Binary band initial line profile signal
- **SP_{N}**: Binary band signal
- **SPP_{N}**: Binary band line profile signal
- **SPU_{N}**: Binary line profile update signal
- **ST**: Text area binary output map signal
- **S_{W}**: Window length of short-window energy computation
- **TA**: Threshold adaptation operation
- **TC**: Combined threshold level
- **TD**: Text detection operation
- **TH_{N}**: Fixed threshold level
- **VPO**: Video processing operation
- **VSB_{M}**: Vertical slice binarization operation
- **VSP_{M}**: Vertical slice partitioning operation
- **VTH**: Binarization threshold parameter for line profile generation

- **1**: System / Apparatus according to the present invention
- **10**: first section, receiving section
- **20**: second section, processing section
- **30**: third section, application section

## Claims

1. Method for classifying digital image data,
wherein a post-processing is employed operating non-linearly and using artificial text overlay attribute constraints.

2. Method for classifying digital image data,
- wherein a luminance component of the input image is processed by a filter bank with band-pass transfer characteristic that generates N separate filter responses,
- wherein each of said filter responses is binarized and post-processed non-linearly using typical attribute constraints of artificial text overlays,
- wherein said N post-processed filter results are recombined into a single binary image map, and
- wherein said single binary image map classifies each pixel of the original luminance image as being text or non-text.

3. Method according to any one of the preceding claims, comprising:
(a) a step of receiving (S1) digital image data (ID) or a part thereof as an input signal (IS) or as a part thereof, said digital image data (ID) or said part thereof being representative for an image (I) or for a part or a sequence thereof,
(b) a step of processing (S2) said digital image data (ID) in order to generate and provide image classification data (ICD), said image classification data (ICD) at least one of indicating and describing at least one of the presence, the position and the further properties of text portions with respect to said image (I), said part of an image (I) or said sequence of images (I) underlying said digital image data (ID) or a part thereof, and
(c) a step of providing and/or applying (S3) said image classification data (ICD),

4. Method according to claim 3,
wherein said step (c) of processing (S2) said digital image data (ID) comprises:
(c1) a sub-step of detecting and providing (S2-1) a luminance component (SI) of said digital image data (ID),
(c2) a sub-step of processing (S2-2) said luminance component (SI) by a filter bank operation (FB)
- said filter bank operation (FB) having a band-pass transfer characteristic and
- said filter bank operation (FB) generating a plurality of N separate filter response signal components (FRSj; j = 1, *...,* N), N being an integer,
(c3) a sub-step of binarizing (S2-3) said N filter response signal components (FRSj; j = 1, ..., N), thereby generating respective binarized filter response signal components (SFj, j = 1, ..., N),
(c4) a sub-step of applying (S2-4) to each of said binarized filter response signal components (SFj; j = 1, ..., N) a respective post-processing operation (PPj; j = 1, ..., N), thereby generating respective binary band signals as post-processed binarized filter response signal components (SPj; j = 1... , N),
- said respective post-processing operation (PPj; j = 1, ..., N) in each case operating non-linearly and
- said respective post-processing operation (PPj; j = 1, ..., N) in each case using said artificial text overlay attribute constraints (TOAC), and
(c5) a sub-step of recombining (S2-5) said N post-processed binary filter response signal components (SPj; j = 1, ..., N) in order to form a single binary image map (SC) as a part or as a preform of said image classification data (ICD), said single binary image map (SC) classifying each pixel of said digital image data (ID) or of said luminance component (SI) thereof as being text or as being non-text.

5. Method according to any one of the preceding claims, which is adapted and designed to reliably detect pixels and/or areas of said image (I) or a part thereof underlying said digital image data (ID) or a part thereof.

6. Method according to any one of the preceding claims,
wherein said text overlay attribute constraints (TOAC) are representative for one or an arbitrary combination of attributes of the group consisting of
- medium to high contrast,
- groups of characters/words with the same font, colour, and/or alignment,
- a principle direction being strict or approximately horizontally,
- non-occlusion by other in-scene objects,
- steady or moving uniformly in straight direction, for instance in form of a news ticker or movie credits,
- minimum size,
- maximum size, and
- minimum appearance time.

7. Method according to any one of the preceding claims,
wherein said filter bank (FB) is adapted in order to operate in 1-D dimensional horizontal spatial direction.

8. Method according to any one of the preceding claims,
wherein said filter bank operation (FB) comprises one or a plurality of processes of the group consisting of short window discrete Fourier transform operations, short window discrete cosine transform operations, Goertzel algorithm based operations, FIR operations and IIR operations, in particular in order to obtain a band-limited, horizontally directed and/or multi-band representation of the luminance signal component (SI).

9. Method according to any one of the preceding claims,
wherein said post-processing operations (PPj; j = 1, ..., N) are adapted in order to determine a short window signal energy, in particular in a small horizontal window first, and then in particular to binarize the respective signals using a band-specific threshold.

10. Method according to any one of the preceding claims,
- wherein said single binary image map (SC) as said part or preform of said image classification data (ICD) is obtained in said sub-step (c5) of recombining (S2-5) and
- wherein said N post-processed binary filter response signals (SPj; j = 1, ..., N) is subjected to a combined binary cleaning operation (BCL_{c}) in order to generate a final binary map (ST) or a final binary map signal (ST) as a control signal.

11. Method according to any one of the preceding claims,
wherein for each of said post-processing operations (PPj; j = 1, ..., N) in a first step a respective signal energy or energy value is determined, in particular for a respective short window of a respective horizontal length (Sw), in particular by a EC operation, thereby generating respective signal energy values (SEj; j = 1, ..., N).

12. Method according to claim 11,
wherein for each of said post-processing operations (PPj; j = 1, ..., N) a respective resulting energy signal (SEj; j = 1, ..., N) is formed with a resolution which is reduced horizontally by a factor which is given by the horizontal length (Sw) of the respective short window.

13. Method according to any one of the preceding claims 11 or 12,
wherein for each of said post-processing operations (PPj; j = 1, ..., N) in a following step a respective signal energy value or level (SEj; j = 1, ..., N) is compared to a respective threshold value (TCj; j = 1, *...,* N), in particular by a respective binarization operation (BIN) in particular in order to derive a respective binary map signal (SBj; j = 1, ..., N).

14. Method according to any one of the preceding claims 11 to 13,
wherein for each of said post-processing operations (PPj; j = 1, ..., N) the respective threshold values (TCj; j = 1, *...,* N) are adaptively changed to or with respect to a measured noise level (NL), in particular in order to mitigate effects of additive noise which in particular might be contained in the input signal (IS, SI).

15. Method according to claim 14,
wherein the adaptive change of the respective threshold values (TCj; j = 1, ..., N) is achieved by a respective threshold adaptation operation (TA), which in particular combines respective fixed but band specific threshold levels (THj; j = 1, ..., N), in particular with a respective variable offset, which is in particular controlled by the measured noise level (NL).

16. Method according to claim 15,
wherein for each of said post-processing operations (PPj; j = 1, ..., N) the respective variable offset is determined depending on the respective type of the used filter bank or filter bank operation (FB) and/or on the statistics of the expected noise signal.

17. Method according to any one of the preceding claims,
- wherein the respective filter bank and the respective filter bank operations (FB) are implemented by linear and time-invariant FIR filters, and
- wherein the respective noise is modelled as an additive white Gaussian noise.

18. Method according to any one of the preceding claims 11 to 17,
wherein for each of said post-processing operations (PPj; j = 1, ..., N) after the respective binarization process a respective initialized profile is generated as a respective horizontal projection from the respective binary band map signal (SBj; j = 1, *...,* N), in particular by a respective line profile generation operation (LPG).

19. Method according to claim 18,
wherein for each of said post-processing operations (PPj; j = 1, ..., N) the respective line profile is defined as a respective binary vector with H elements for a picture height of H scan lines, in particular realizing 1 bit per scan line, H being an integer.

20. Method according to any one of the preceding claims 18 or 19,
wherein for each of said post-processing operations (PPj; j = 1, ..., N) the respective line profile element is set to a value of "1", if there is a substantial indication for a text area from the respective binary map (SBj; j = 1, ..., N).

21. Method according to any one of the preceding claims 18 to 20,
wherein for each of said post-processing operations (PPj; j = 1, *...,* N) a respective line profile element is set to a value of "0", if there is no substantial indication for a text area from the respective binary map (SBj; j = 1, *...,* N).

22. Method according to any one of the preceding claims 18 to 21,
wherein for said line profile generation operation (LPG) in a first step an image area is partitioned into M slices, in particular by a respective partitioning operation (VSPk; k = 1, ..., M), M being an integer.

23. Method according to claim 22,
wherein for each of said line profile generation processes (LPG) in a following step a respective slice profile is generated in particular by summing up all of the plurality of Hw horizontal bits in a respective slice of a respective binary map, in particular by the respective binarization operation (VSBk; k = 1, ..., M).

24. Method according to any one of the preceding claims 22 or 23,
- wherein for each of said line profile generation operations (LPG) a respective sum is compared against a fixed threshold value (VTH) and
- wherein a binary output value is generated with having a value of "1", if the respective sum is larger than or equal to the respective threshold value (VTH).

25. Method according to claim 24,
wherein for each of said line profile generation operations (LPG) the respective output bit is generated with having a value of "0", if the respective sum is not greater than or equal to respective threshold value (VTH).

26. Method according to any one of the preceding claims 22 to 25,
wherein a respective overall line profile (SPLj; j = 1, ..., N) is created by a respective profile combination operation (PC), in particular from all slice profiles.

27. Method according to claim 26,
wherein the respective slice profiles are combined by means of a bit-wise OR operation.

28. Method according to any one of the preceding claims,
wherein the respective initial line profile (SPLj; j = 1, ..., N) is used as an auxiliary input value for a respective binary cleaning operation (BCLj; j = 1, ..., N).

29. Method according to claim 28,
wherein the respective initial binary line profile (SPLj; j = 1, ..., N) is processed by a respective line run length cleaning operation (RLC), in particular in order to produce a respective cleaned profile (SPCj; j = 1, ..., N).

30. Method according to any one of the preceding claims 28 or 29,
wherein for each of said binary cleaning operation (BCLj; j = 1, ..., N) first of all sequences of a plurality of up to NVC,N elements having the value "0" which are enclosed by elements having the value "1" are replaced by or with the value "1".

31. Method according to any one of the preceding claims 28 to 30,
wherein for each of said binary cleaning operations (BCLj; j = 1, ..., N) in a further step all sequences of pluralities of up to NVC,N elements having the value "1" which are enclosed by elements having the value "0" are replaced by the value "0".

32. Method according to any one of the preceding claims,
wherein each of said binary band map signals (SBj; j = 1, ..., N) is processed by a respective column profile generation operation (CPG), in particular in order to produce a respective binary band map (SBMj; j = 1, ..., N).

33. Method according to any one of the preceding claims,
wherein a respective cleaned profile (SPCj; j = 1, *...,* N) is adapted to control which lines in the respective binary map (SBj; j = 1, *...,* N) are used for processing.

34. Method according to claim 33,
wherein all elements of a corresponding scan line in a respective binary band map signal (SBMj; j = 1, ..., N) are set to be zero, if a profile element has the value "0".

35. Method according to claim 34,
wherein a corresponding element in a respective output line profile (SPPj; j = 1, ..., N) is set to have a value of "0", in particular via the respective profile update signal (SPUj; j = 1, ..., N) and a respective profile update operation (PU), if a processing of remaining lines of a respective binary map (SBj; j = 1, ..., N) results in a line having elements with values which are all set to "0" in the respective binary band map (SBMj; j = 1, ..., N).

36. Method according to any one of the preceding claims 32 to 35,
wherein the processing is designed in order to have the respective binary map and the line profile always in synchronicity.

37. Method according to any one of the preceding claims,
wherein the respective column profile generation operation (CPG) is adapted in order to loop over all sections marked in the respective binary map and the line profile (SPCj; j = 1, ..., N) as potential text blocks to be evaluated.

38. Method according to claim 34,
wherein for each "0" to "1" transition in the respective line profile (SPCj; j = 1, ..., N) an iteration is started and a respective column profile is initialized with the respective contents of the corresponding line in the binary map, wherein in particular the respective scan line number is recorded as a value n1.

39. Method according to any one of the preceding claims 37 and 38,
wherein all following scan lines of the respective binary map are added to the respective column profile, in particular up to and including a last line before a respective "1" to "0" transition in the line profile, wherein the respective line number is recorded as a value n2.

40. Method according to any one of the preceding claims 37 to 39,
wherein the respective elements of a respective column profile are compared against a threshold value (HTH) in order to obtain the binary column profile.

41. Method according to any one of the preceding claims 37 to 40,
wherein the column profile is cleaned up by replacing sequences of pluralities of up to NHC,N elements having a value "0" which are enclosed by elements having a value "1" with a value "1", in particular in a similar manner as with respect to the RLC operation for the line profile.

42. Method according to any one of the preceding claims 37 to 41,
wherein in a following step all sequences of pluralities of up to NHC,N elements having a value of "1" which are enclosed by elements having a value of "0" are replaced by values of "0".

43. Method according to any one of the preceding claims 37 to 42,
wherein all lines in a range of n1 to n2 within the respective binary output map (SBMj; j = 1, ..., N) re replaced by a cleaned binary column profile.

44. Method according to any one of the preceding claims 37 to 43,
wherein a respective line profile (SPPj; j = 1, ..., N) is updated and set to a value "0" for all elements from n1 to n2, if the respective column profile contains only values of "0" after the respective binarization step has been performed.

45. Method according to any one of the preceding claims 37 to 44,
wherein the respective column profile generation operation (CPG) is repeated iteratively with a next iteration step until an end of the respective image at a respective scan line (H).

46. Method according to any one of the preceding claims 37 to 45.
wherein respective resulting binary band maps (SBMj; j = 1, ..., N) are combined by a respective band combination operation (BBC), in particular in order to produce a single binary map (SCM).

47. Method according to any one of the preceding claims 37 to 46,
wherein said binary line profiles (SPPj; j = 1, ..., N) are combined, in particular in order to produce a single binary line profile (SCP).

48. Method according to any one of the preceding claims 46 and 47,
wherein the respective single binary map (SCM) and the respective single binary line profile (SCP) are used together as said single binary map (SC).

49. Method according to any one of the preceding claims 37 to 48,
wherein the respective combination operation is realized via a look-up table, which in particular performs a mapping from a N bit value to a binary value, further in particular by combining and using the binary values of band maps or line profiles from a same spatial position or image coordinate as a table index, in particular in order to find the respective binary replacement values.

50. Method according to any one of the preceding claims,
wherein the final cleaning operation (BCL_{C}) of the combined signal (SC) as a combination of SCM and of SCP is performed, which is in particular structurally identical to the cleaning operation (BCLj; j = 1, ..., N) for the respective band signals, in particular except for the output or the cleaned line profile.

51. System/apparatus for classifying digital image data, which is adapted and comprises means for realizing a method for classifying digital image data according to any one of the preceding claims 1 to 50.

52. Computer program product, comprising computer program means which is adapted in order to perform a method for classifying digital image data according to any one of the preceding claims 1 to 50 and the steps thereof when it is executed on a computer or a digital signal processing means.

53. Computer readable storage medium,
Comprising a computer program product according to claim 52.
